# EUROPÄISCHE PATENTSCHRIFT

(11) **EP 1 725 858 B1**
(45) Veröffentlichungstag und Bekanntmachung des Hinweises auf die Patenterteilung: **08.09.2010**
(21) Anmeldenummer: 05729826.7
(22) Anmeldetag: 16.03.2005
(51) Int. Cl.: G01N 23/00, H05G 1/34

(54) **VORRICHTUNG ZUR ONLINE-ANALYSE**
ONLINE ANALYSIS DEVICE
DISPOSITIF D'ANALYSE EN LIGNE

(30) Priorität: 16.03.2004 DE 102004012704
(43) Veröffentlichungstag der Anmeldung: 29.11.2006
(73) Patentinhaber: Katz, Elisabeth, 72226 Simmersfeld (DE)
(72) Erfinder: KLEIN, Albert, 72226 Simmersfeld (DE)
(74) Vertreter: Schön, Thilo
(86) Internationale Anmeldenummer: PCT/EP2005/002785
(87) Internationale Veröffentlichungsnummer: WO 2005/090952

(56) Entgegenhaltungen:
- US-A- 3 655 964
- US-A- 5 974 111

## Beschreibung

### Technisches Gebiet der Erfindung

Die Erfindung betrifft eine Vorrichtung zur online-Analyse nach dem Oberbegriff des Anspruches 1.

### Stand der Technik

Der Einsatz von ionisierender Strahlung bei online Analyseverfahren ist bekannt. Hierbei wird ein meist räumlich begrenzter Messbereich des an der Vorrichtung vorbeigeförderten Materials bestrahlt, um die Wechselwirkung mit dem Material zu bestimmen. Hierbei kann sowohl das transmittierte als auch das rückgestreute oder durch Anregung emittierte Signal benutzt werden. Bei der Röntgenfluoreszenz wird z.B. die erzeugte charakteristische Röntgenlumineszenzstrahlung wird mittels eines oder mehrerer Detektoren gemessen und aus dem gemessenen Spektrum auf die Zusammensetzung des Materials geschlossen.

Zur Bestrahlung des Materials bedient man sich in der Regel entweder eines radioaktiven Strahlers oder einer Röntgenröhre. Aus Strahlenschutzgründen ist es in der Regel notwendig, dafür zu sorgen, dass dann, wenn sich kein zu messendes Material im Messbereich befindet, ein Strahlungsaustritt aus der Röntgen- oder Gammaquelle verhindert wird. Hierzu verwendet man eine bewegliche Abdeckklappe, einen sogenannten Shutter, der von einem Materialdetektor, welcher das Vorhandensein zu messenden Materials im Meßbereich detektiert, angesteuert wird. Im Falle der Verwendung einer radioaktiven Gammaquelle ist der Einsatz eines solchen mechanischen Shutters unumgänglich, da sich ein Radioisotop naturgemäß nicht abschalten lässt.

Shutter werden jedoch auch dann verwendet, wenn als Strahlungsquelle eine Röntgenröhre dient, da ein häufiges vollständiges Abschalten der Röntgenröhre deren Lebensdauer stark beschränken würde.

Insbesondere im industriellen Einsatz mit rauhen und schmutzigen Umweltbedingungen bereitet das Vorhandensein eines mechanischen Shutters oft Schwierigkeiten, da er sich leicht verklemmen kann, was zu einer Fehlfunktion der Messvorrichtung führt.

Aus der gattungsbildenden US-A-5974111 ist eine Vorrichtung zur Durchleuchtung von Gepäckstücken bekannt. Die Vorrichtung umfasst eine von einem Steuergerät gesteuerte Röntgenröhre und einen Materialdetektor. In Abhängigkeit eines Signals vom Materialdetektor schaltet das Steuergerät die Röntgenröhre an und aus.

### Gegenstand der Erfindung

Hiervon ausgehend ist es Aufgabe der Erfindung, eine gattungsgemäße Vorrichtung, die eine Röntgenröhre als Strahlungsquelle nutzt, dahingehend weiterzubilden, dass ein mechanischer Shutter entfallen kann, ohne dass die Lebensdauer der Röntgenröhre beeinträchtigt wird.

Diese Aufgabe wird durch eine Vorrichtung zur Online-Analyse mit den Merkmalen des Anspruchs 1 gelöst.

Die erfindungsgemäße Verbesserung wird wie folgt erreicht. Der Materialdetektor, der das Vorhandensein oder nicht-Vorhandensein von zu messendem Material detektiert, steuert nicht wie bisher einen mechanischen Shutter an, sondern gibt ein entsprechendes Signal an das Steuergerät der Röntgenröhre weiter. Das Steuergerät kann zwei unterschiedliche Betriebszustände für die Röntgenröhre generieren, nämlich einen aktiven Zustand, bei dem die Röntgenröhre Röntgenstrahlung der gewünschten Energie und Intensität erzeugt und einen Ruhezustand, in dem die Röntgenröhre keine Energiequanten oberhalb einer bestimmten Energie abgibt. Um zu verhindern, dass durch häufigen Wechsel der beiden Betriebszustände die Lebensdauer der Röntgenröhre erheblich verringert wird, wird die Röntgenröhre im Ruhezustand nicht vollständig abgeschaltet, sondern lediglich deren Beschleunigungsspannung erheblich verringert, während der Heizstrom der Glühkathode möglich konstant gehalten wird. Gewisse Schwankungen können hierbei toleriert werden; Änderungen der Stärke des Heizstroms von bis zu 50% können - abhängig von der jeweils verwendeten Röntgenröhre - noch akzeptabel sein. Zumeist sollte jedoch eine Konstanz ± 10% angestrebt werden. Um Raumladungseffekte zu verhindern oder zumindest gering zu halten, wird die Beschleunigungsspannung nicht auf Null, sondern lediglich auf einen Wert unter 5 KV abgesenkt, der hinsichtlich der entstehenden Strahlung unbedenklich ist.

Bei stabilisierten Beschleunigungsspannungsnetzgeräten, wie sie in der Messtechnik eingesetzt werden, ist es hierbei nicht möglich, den Heizstrom durch einen getrennten Stromkreis konstant zu halten, da durch Regelung des Heizstromes ein konstanter Anodenstrom erzeugt wird. Diese Geräte verfügen daher über Signalspannungseingänge, mit denen die Sollwerte für Beschleunigungsspannung und Anodenstrom vorgegeben werden.

Erfindungsgemäß wird die Röntgenröhre daher so geschaltet, dass gleichzeitig die Beschleunigungsspannung und der Anodenstrom so verringert wird, dass der Heizstrom im wesentlichen konstant bleibt. Dies ermöglicht es, die Röhre in einen ungefährlichen Ruhezustand zu bringen, ohne deren Lebensdauer im Vergleich zum Dauerbetrieb zu verkürzen.

Nach einem bevorzugten Ausführungsbeispiel gemäß Anspruch 2 weist das Steuergerät zur Realisierung der beiden Betriebszustände je zwei Schaltkreise zur Erzeugung der Signalspannungen für Beschleunigungsspannung und Anodenstrom auf, zwischen denen mittels eines Relais umgeschaltet wird. Das Relais wird hierbei durch den Materialdetektor angesteuert.

Weitere bevorzugte Ausführungsformen ergeben sich aus den weiteren Unteransprüchen sowie aus dem nun mit Bezug auf die Figuren näher erläuterten Ausführungsbeispiel. Es zeigen:

### Kurzbeschreibung der Zeichnungen

- Figur 1: Eine schematische Darstellung einer Vorrichtung zur Online- Elementanalyse und
- Figur 2: eine schematisierte Darstellung eines Steuergeräts und einer hierdurch angesteuerten Röntgenröhre.

### Beschreibung bevorzugter Ausführungsformen

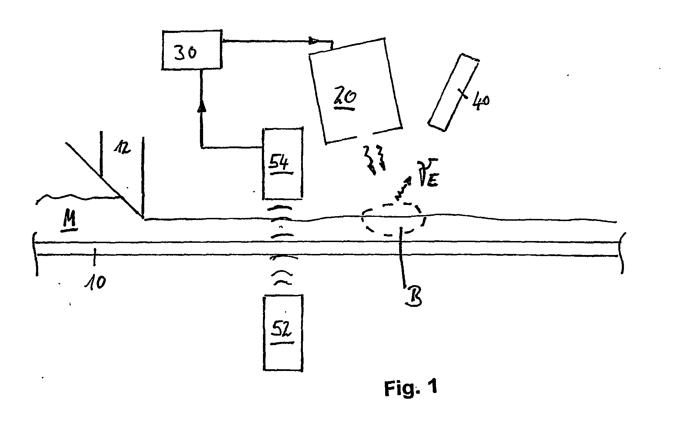

Figur 1 zeigt eine Vorrichtung zur Elementanalyse als Beispiel für eine online-Analyse. Auf dem Förderband 10, das hier als Zuführeinrichtung dient, wird Material M gefördert. Hierbei wird das Material M zunächst mittels des Pfluges 12 geebnet.

Die Röntgenröhre 10 bestrahlt den Messbereich B auf dem Material M. Ein Röntgendetektor 40 ist ebenfalls auf den Messbereich B gerichtet, um Röntgenfluoreszenzstrahlung zu messen. Die hierbei gewonnenen Spektren werden zur Bestimmung der Zusammensetzung des Materials M herangezogen.

In Förderrichtung gesehen vor dem Messbereich B ist eine aus einem Mikrowellensender 52 und einem Mikrowellenempfänger 54 bestehende Mikrowellen-Messstrecke angeordnet. Diese dient dazu, festzustellen, ob sich Material M auf dem Förderband 10 befindet oder nicht. Es sind natürlich auch andere Detektoren zur Erfüllung dieses Zwecks möglich, z.B. kapazitive Sensoren. Wird die Spannung im Ruhezustand nur so weit reduziert, dass der Detektor noch ein Signal empfängt, ist es auch möglich, das vom Röntgendetektor 40 generierte Signal ebenfalls zur Feststellung des Vorhandenseins oder Nichtvorhandenseins von Material heranzuziehen. Der Röntgendetektor 40 wäre im Sinne dieser Anmeldung dann gleichzeitig der Materialdetektor.

Der in diesem Ausführungsbeispiel als Materialdetektor dienende Mikrowellenempfänger 54 stellt aufgrund der Dämpfung und/oder Phasenverschiebung des Mikrowellensignals fest, ob sich Material M auf dem Förderband 10 befindet oder nicht. Ein hiervon abhängiges und entsprechend der Transportgeschwindigkeit des Bandes verzögertes Signal gibt der Mikrowellenempfänger 54 an das Steuergerät 30 der Röntgenröhre 20 weiter.

Das Steuergerät 30 generiert den Heizstrom und die Beschleunigungsspannung für die Röntgenröhre 20. Abhängig vom Signal des Mikrowellenempfängers 54 erzeugt das Steuergerät 30 zwei unterschiedliche Betriebszustände für die Röntgenröhre 20. Dies ist zum einen der aktive Zustand, bei dem die Beschleunigungsspannung beispielsweise einen Wert zwischen 15 und 25 keV aufweist. Ein typischer Heizstrom für die Heizkathode beträgt hierbei 2 A. Dieser Betriebszustand wird dann erzeugt, wenn von der Mikrowellenmessstrecke Material auf dem Förderband detektiert wird. Detektiert die Mikrowellenmessstrecke kein Material auf dem Förderband 10, stellt das Steuergerät auf den zweiten Betriebszustand um. Hierbei wird der Heizstrom möglichst konstant gehalten, während die Beschleunigungsspannung erheblich auf einen vorgegebenen Wert, beispielsweise 3000 Volt abgesenkt wird.

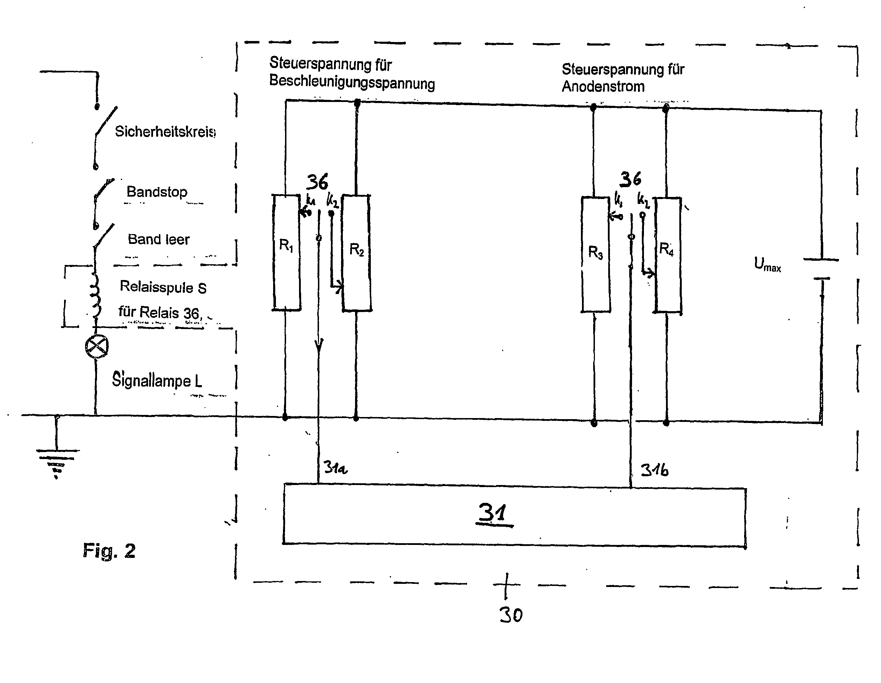

Figur 2 zeigt schematisch ein Ausführungsbeispiel eines Steuergeräts 30. Die beiden Betriebszustände werden hier dadurch realisiert, dass für jeden Betriebszustand feste Beschleunigungsspannungen und für Betriebs- und Ruhezustand erzeugt werden mit korrespondierenden Anodenströmen.

Die Röntgenröhre soll bei leerem und stehendem Band in den Ruhezustand geschaltet werden. Diese Informationen stehen als potentialfreie Kontakte zur Verfügung. Im einem Stromkreis liegen diese Kontakte in Reihe mit der Relaisspule S eines zwei Schaltzustände aufweisenden Doppelrelais mit den Kontakten K₁, K₁' und K₂, K₂'.

In diesen Stromkreis kann ferner zur Signalisierung eine Signallampe installiert werden. Um zu gewährleisten, dass bei geöffnetem Sicherheitskreis die Signallampe aus ist, sollte ein weiterer potentialfreier Kontakt in Reihe geschaltet werden, der den Zustand des Sicherheitskreises signalisiert.

Die Steuerspannungen für Beschleunigungsspannung und Anodenstrom werden aus einer Referenzspannung, die gleich der maximalen Steuerspannung Umax sein sollte, mit 4 Potentiometern abgeleitet, wobei mit R1 und R2 die Steuerspannungen für den Betriebs- und Ruhezustand der Beschleunigungsspannung und mit R3 und R4 die Steuerspannungen für den Betriebs- und Ruhezustand des Anodenstromes gewonnen werden. Diese werden über die Relaiskontakte K₁, K₁' bzw. K₂, K₂' den Steuereingängen 31a, 31 b für die Beschleunigungsspannung und den Anodenstrom des Beschleunigungsspannungsgenerators 31 zugeführt. Nach Einstellung der Steuerspannungen für die gewünschte Beschleunigungsspannung und den gewünschten Anodenstrom im Betriebszustand sowie für die gewünschte Beschleunigungsspannung im Ruhezustand wird im Betriebszustand der Heizstrom oder Spannungsabfall an der Röhrenheizung gemessen und im Ruhezustand der Anodenstrom so eingestellt, dass der Heizstrom bzw. der Spannungsabfall an der Heizung den gleichen Wert hat wie unter Betriebsbedingungen hat. Die Beschleunigungsspannung kann hierbei nicht beliebig niedrig eingestellt werden, da die Regelung für den Anodenstrom im Regelbereich betrieben werden muß. Eine Spannung kleiner 5 kV ist aber im allgemeinen leicht erreichbar.

Die erforderlichen Spannungen können natürlich auch auf andere Weise, z.B. mit einem von einem Mikroprozessor gesteuerten DA-Wandler erzeugt werden.

Der Sicherheitskreis des Steuergerätes 30, der bei Unterbrechung die Röntgenröhre völlig stromlos macht, ist nicht dargestellt.

## Patentansprüche

1. Vorrichtung zur Online-Analyse mit:
- einer Zuführeinrichtung zum Zuführen des zu analysierenden Materials,
- einer Röntgenröhre (20), deren Röntgenstrahl auf einen Meßbereich (B) der Zuführeinrichtung gerichtet ist,
- einem Steuergerät (30) zum Ansteuern der Röntgenröhre,
- einem Röntgendetektor (40), der Röntgenstrahlung misst, die mit dem Material in Wechselwirkung getreten ist, oder von diesem emittiert wird,
- einem Materialdetektor, welcher detektiert, ob Material im Meßbereich vorhanden ist, oder diesem zugeführt wird und ein hiervon abhängiges Signal generiert,
wobei der Materialdetektor mit dem Steuergerät (30) verbunden ist und das Steuergerät (30) in Abhängigkeit vom Signal des Materialdetektors die Röntgenröhre (20) ansteuert,
**dadurch gekennzeichnet, dass** das Steuergerät (30) die Röntgenröhre in einem von zwei Betriebszuständen ansteuert, wobei der Heizstrom der Röntgenröhre in beiden Betriebszuständen in der gleichen Größenordnung liegt und die Beschleunigungsspannung im ersten Betriebszustand zwischen 5 kV und 100 kV und im zweiten Betriebszustand kleiner 5 kV ist, wobei der erste Betriebszustand der aktive Betriebszustand ist, der dann erzeugt wird, wenn vom Materialdetektor Material detektiert wird und wobei der zweite Betriebszustand der Ruhezustand ist, der dann erzeugt wird, wenn vom Materialdetektor kein Material detektiert wird.

2. Vorrichtung nach Anspruch 1, **dadurch gekennzeichnet, dass** die Schwankung der Stärke des Heizstroms im zweiten Betriebszustand gegenüber der Stäke im ersten Betriebszustand kleiner als 50% ist.

3. Vorrichtung nach Anspruch 2, **dadurch gekennzeichnet, dass** die Schwankung der Stärke des Heizstroms im zweiten Betriebszustand gegenüber der Stäke im ersten Betriebszustand kleiner als 10% ist.

4. Vorrichtung zur nach einem der Ansprüche 1 bis 3, **dadurch gekennzeichnet, dass** die beiden Betriebszustände im Steuergerät (30) mittels zweier Schaltkreise erzeugt werden, zwischen denen mittels eines Relais (36) umgeschaltet wird.

5. Vorrichtung nach einem der Ansprüche 1 bis 3, **dadurch gekennzeichnet, dass** die beiden Betriebszustände über Analogausgänge eines mikroprozessorgesteuerten Systems eingestellt werden.

6. Vorrichtung nach Anspruch 1, **dadurch gekennzeichnet, dass** der Beschleunigungsspannungsgenerator (31) über eine digitale Schnittstelle zur Steuerung von Beschleunigungsspannung und Anodenstrom verfügt und die beiden Betriebszustände über diese Schnittstelle eingestellt werden.

7. Vorrichtung nach einem der vorangehenden Ansprüche, **dadurch gekennzeichnet, dass** die Beschleunigungsspannung im ersten Betriebszustand zwischen 10 und 30 kV und im zweiten Betriebszustand zwischen 500 V und 5 kV beträgt.

8. Vorrichtung nach einem der vorangehenden Ansprüche, **dadurch gekennzeichnet, dass** die online Analyse mittels einer Transmissionsmessung durchgeführt wird.

9. Vorrichtung nach einem der vorangehenden Ansprüche, **dadurch gekennzeichnet, dass** die online Analyse mittels einer Rückstreumessung durchgeführt wird.

10. Vorrichtung nach einem der vorangehenden Ansprüche, **dadurch gekennzeichnet, dass** die online-Analyse nach dem Prinzip der Röntgenfluoreszenz arbeitet.

11. Vorrichtung nach einem der vorangehenden Ansprüche, **dadurch gekennzeichnet, dass** mit einer Signallampe (L) der Betriebszustand der Röhre anzeigt wird.

12. Vorrichtung nach Anspruch 11, **dadurch gekennzeichnet, dass** die Signallampe (L) im Ruhezustand der Röhre und bei geöffnetem Sicherheitskreis erlischt.

## Claims

1. Device for online analysis with:
- a feeding system for feeding the material for analysis.
- an X-ray tube (20) whose X-ray beam is directed towards a measuring area (B) of the feeding system,
- a control unit (30) for controlling the X-ray tube,
- an X-ray detector (40) for measuring X-ray radiation interacting with, or emitted by, the material,
- a material detector which detects whether the material is present in the measuring area or is fed thereto and generates a signal accordingly,
whereby the material detector is connected to the control unit (30) and said control unit (30) controls the X-ray tube (20) as a function of the signal of the material detector, **characterised in that** the control unit (30) controls the X-ray tube in one of two operating states, while the current heating the X-ray tube lies within the same order of magnitude in both operating states and the accelerating voltage in the first operating state is between 5 kV and 100 kV and is under 5 kV in the second operating state, the first operating state being the active operating state, which is generated when material is detected by the material detector, and the second operating state being the idle state, which is generated when no material is detected by the material detector.

2. Device according to claim 1, **characterised in that** the fluctuation in the heating-current intensity in the second operating state, as compared to the intensity in the first operating state, is less than 50%.

3. Device according to claim 2, **characterised in that** the fluctuation in the heating-current intensity in the second operating state, as compared to the intensity in the first operating state, is less than 10%.

4. Device according to one of claims 1 to 3, **characterised in that** both operating states in the control unit (30) are generated by means of two circuits, and a relay (36) switches between these two circuits.

5. Device according to one of claims 1 to 3, **characterised in that** both operating states are adjusted via analogue outputs of a microprocessor-controlled system.

6. Device according to claim 1, **characterised in that** the accelerating voltage generator (31) includes a digital interface for controlling the accelerating voltage and anode current, and that both operating states are adjusted via this interface.

7. Device according to one of the preceding claims, **characterised in that** the accelerating voltage in the first operating state is between 10 and 30 kV and in the second operating state is between 500 V and 5 kV.

8. Device according to one of the preceding claims, **characterised in that** the online analysis is conducted by means of a transmission measurement.

9. Device according to one of the preceding claims, **characterised in that** the online analysis is conducted by means of a backscatter measurement.

10. Device according to one of the preceding claims, **characterised in that** the online analysis operates according to the principle of X-ray fluorescence.

11. Device according to one of the preceding claims, **characterised in that** the operating state of the tube is displayed by means of an indicator lamp (L).

12. Device according to claim 11, **characterised in that** the indicator lamp (L) goes out when the tube is in the idle state and a safety circuit is open.

## Revendications

1. Dispositif d'analyse en ligne comprenant :
- un dispositif d'alimentation pour l'alimentation en matériau à analyser,
- un tube à rayons X (20) dont le rayonnement X est dirigé sur une région de mesure (B) du dispositif d'alimentation,
- un appareil de pilotage (30) pour piloter le tube à rayons X,
- un détecteur de rayons X (40) qui mesure le rayonnement X qui est entré en interaction avec le matériau ou qui est émis par celui-ci,
- un détecteur de matériau, lequel détecte si le matériau est présent dans la région de mesure ou si on alimente en celui-ci, et génère un signal dépendant de cela,
le détecteur de matériau étant relié à l'appareil de pilotage (30) et l'appareil de pilotage (30) pilotant le tube à rayons X (20) en fonction du signal du détecteur de matériau,
**caractérisé en ce que** l'appareil de pilotage (30) pilote le tube à rayons X dans l'un parmi deux états de fonctionnement, le courant de chauffage du tube à rayons X étant du même ordre de grandeur dans les deux états de fonctionnement, et la tension d'accélération est comprise entre 5 kV et 100 kV dans le premier état de fonctionnement et est inférieure à 5 kV dans le deuxième état de fonctionnement, le premier état de fonctionnement étant l'état de fonctionnement actif que l'on génère lorsque du matériau est détecté par le détecteur de matériau, et le deuxième état de fonctionnement étant l'état de repos que l'on génère lorsqu'aucun matériau n'est détecté par le détecteur de matériau.

2. Dispositif selon la revendication 1, **caractérisé en ce que** la fluctuation de la force du courant de chauffage dans le deuxième état de fonctionnement par rapport à la force du courant de chauffage dans le premier état de fonctionnement est inférieure à 50%.

3. Dispositif selon la revendication 2, **caractérisé en ce que** la fluctuation de la force du courant de chauffage dans le deuxième état de fonctionnement par rapport à la force du courant de chauffage dans le premier état de fonctionnement est inférieure à 10%.

4. Dispositif selon l'une des revendications 1 à 3, **caractérisé en ce que** les deux états de fonctionnement sont générés dans l'appareil de pilotage (30) au moyen de deux circuits entre lesquels on commute au moyen d'un relais (36).

5. Dispositif selon l'une des revendications 1 à 3, **caractérisé en ce que** les deux états de fonctionnement sont réglés par des sorties analogiques d'un système piloté par microprocesseur.

6. Dispositif selon la revendication 1, **caractérisé en ce que** le générateur de tension d'accélération (31) dispose d'une interface numérique pour piloter tension d'accélération et courant anodique et les deux états de fonctionnement sont réglés par l'intermédiaire de cette interface.

7. Dispositif selon l'une des revendications précédentes, **caractérisé en ce que** la tension d'accélération est comprise entre 10 et 30 kV dans le premier état de fonctionnement et entre 500 V et 5 kV dans le deuxième état de fonctionnement.

8. Dispositif selon l'une des revendications précédentes, **caractérisé en ce que** l'analyse en ligne est effectuée au moyen d'une mesure de transmission.

9. Dispositif selon l'une des revendications précédentes, **caractérisé en ce que** l'analyse en ligne est effectuée au moyen d'une mesure de rétrodiffusion.

10. Dispositif selon l'une des revendications précédentes, **caractérisé en ce que** l'analyse en ligne fonctionne selon le principe de la fluorescence X.

11. Dispositif selon l'une des revendications précédentes, **caractérisé en ce que** l'état de fonctionnement du tube est indiqué par une lampe de signalisation (L).

12. Dispositif selon la revendication 11, **caractérisé en ce que** la lampe de signalisation (L) s'éteint à l'état de repos du tube et lorsque le circuit de sécurité est ouvert.
